# EUROPÄISCHE PATENTSCHRIFT

(11) **EP 0 524 478 B1**
(45) Veröffentlichungstag und Bekanntmachung des Hinweises auf die Patenterteilung: **22.11.1995**
(21) Anmeldenummer: 92111474.0
(22) Anmeldetag: 07.07.1992
(51) Int. Cl.: D21F 1/00, B65G 15/54

(54) **Drahtgliederband**
Spiral fabric
Tissu en hélices combinées

(30) Priorität: 10.07.1991 DE 4122805
(43) Veröffentlichungstag der Anmeldung: 27.01.1993
(73) Patentinhaber: Thomas Josef Heimbach GmbH & Co., D-52353 Düren (DE)
(72) Erfinder: Halterbeck, Walter, W-5160 Düren (DE); Hüser, Martin, W-5160 Düren (DE)
(74) Vertreter: Paul, Dieter-Alfred, Dipl.-Ing.

(56) Entgegenhaltungen:
- EP-A- 0 478 925
- DE-A- 2 419 751
- DE-A- 3 015 229
- US-A- 2 276 099
- US-A- 3 202 387
- US-A- 3 920 117

## Beschreibung

Die Erfindung betrifft ein Drahtgliederband für Prozeßzwecke, insbesondere als Papiermaschinenbespannung, mit einer Vielzahl von nebeneinander angeordneten, ineinandergreifenden Drahtwendeln, welche Steckdrähte nur teilweise einfassende Kopfbögen, deren Enden sich in die Kopfbögen verbindenden Windungsschenkeln forsetzen (DE-A-2 419 751).

Es sind schon sehr frühzeitig Vorschläge gemacht worden, derartige Drahtgliederbänder als Bespannungen von Papiermaschinen einzusetzen, um damit die Papierbahn durch die Papiermaschine zu führen und abzustützen. Ein für Papiermaschinen brauchbares Drahtgliederband ist jedoch erst durch die Erfindung nach der DE-OS 24 19 751 entstanden. Diese Drahtgliederbänder werden aus einer Vielzahl von in Laufrichtung nebeneinander angeordneten, sich quer zur Laufrichtung erstreckenden Drahtwendeln aus thermofixierbarem Kunststoff zusammengefügt, indem die Windungen einer Drahtwendel in die Lücken zwischen den Windungen der schon angefügten Drahtwendel eingeschoben werden, wobei die Überlappung derart hergestellt wird, daß ein Kanal entsteht, durch den ein Steckdraht zur Kupplung der jeweils benachbarten Drahtwendeln geschoben wird. Auf diese Weise kann ein endloses Drahtgliederband hergestellt werden, das sich wegen der Scharnierbeweglichkeit zwischen den jeweils benachbarten Drahtwendeln durch gute Anpassungsfähigkeit auszeichnet.

Der Draht einer Drahtwendel hat grundsätzlich einen schraubenförmigen Verlauf, wobei die Steigung innerhalb einer Windung durchaus unterschiedlich sein kann. Um eine glatte Oberfläche zu erzielen, sind die Drahtwendeln bei den meisten Drahtgliederbändern abgeflacht. Auf diese Weise ergeben sich gerade gestreckte Windungsschenkel an der Ober- und Unterseite des Drahtgliederbandes, welche jeweils zwei Kopfbögen verbinden. In der Regel überlappen sich die jeweils benachbarten Drahtwendeln mit ihren Kopfbögen und umschlingen dabei den dort verlaufenden Steckdraht.

Abweichend von dem aus der DE-OS 24 19 751 bekannten Grundtyp können bei Drahtgliederbändern auch Doppeldrahtwendeln verwendet werden, wie sie sich aus der EP-A-0̸ 116 894 ergeben. Bei diesen Drahtgliederbändern umschlingen sich schraubenförmig die Windungen jeweils von zwei nebeneinander angeordneten Drahtwendeln derart, daß dort Steckdrähte nicht erforderlich sind, sondern nur zur Verbindung der Doppeldrahtwendeln. Auf diese Weise kann die Hälfte der Steckdrähte wegfallen.

In der EP-A-0̸ 0̸18 20̸0̸ sind Drahtgliederbänder verschiedenster Ausführungsformen offenbart. So können Drahtgliederbänder auch doppellagig ausgebildet werden, wobei die Verbindung der Lagen über zusätzliche, beide Lagen umschlingende Drahtwendeln erfolgt. Auch sind dieser Druckschrift Drahtwendeln zu entnehmen, die sich jeweils über drei benachbarte Steckdrähte erstrecken und bei denen sich zwei benachbarte Drahtwendeln über jeweils zwei Steckdrähte überlappen. Aus dieser Druckschrift ist auch bekannt, die jeweils benachbarten Drahtwendeln mit mehr als zwei Steckdrähten zu kuppeln.

Die bis dahin bekannten Drahtgliederbänder haben konstruktionsbedingt eine hohe Luftdurchlässigkeit und führen ein hohes Luftvolumen mit sich. Bei sehr schnell laufenden Papiermaschinen ist dies unerwünscht, weil sehr starke Luftumwälzungen verursacht werden, die zu Zerstörungen der Papierbahn führen können. Zur Beseitigung dieses Problems wird in der EP-A-0̸ 0̸50̸ 374 vorgeschlagen, Füllmaterial in die von den Windungsschenkeln eingeschlossenen Hohlräume einzubringen. Dies bedeutet jedoch bei der Herstellung einen zusätzlichen Aufwand.

Ein weiterer Versuch, die Luftdurchlässigkeit eines Drahtgliederbandes zu verringern, besteht darin, die Windungsschenkel zumindest an der der Papierbahn zugewandten Seite abzuflachen, d. h. breiter als im Bereich der Kopfbögen zu machen und dadurch die Zwischenräume zwischen den Windungsschenkeln einzuengen. Abgesehen davon, daß hierdurch das zwischen den Windungsschenkeln transportierte Luftvolumen nicht verringert wird, ist die Herstellung solcher Drahtwendeln aufwendig.

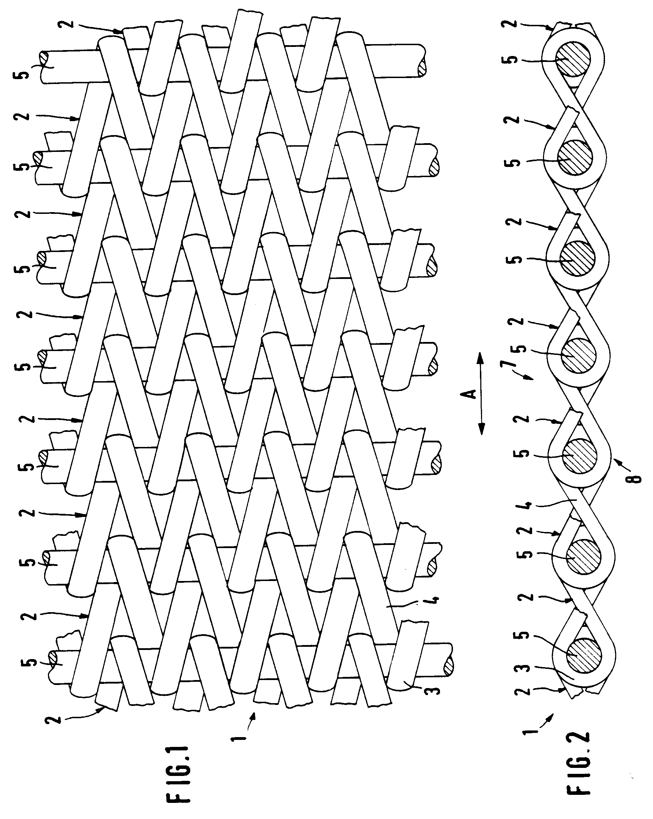

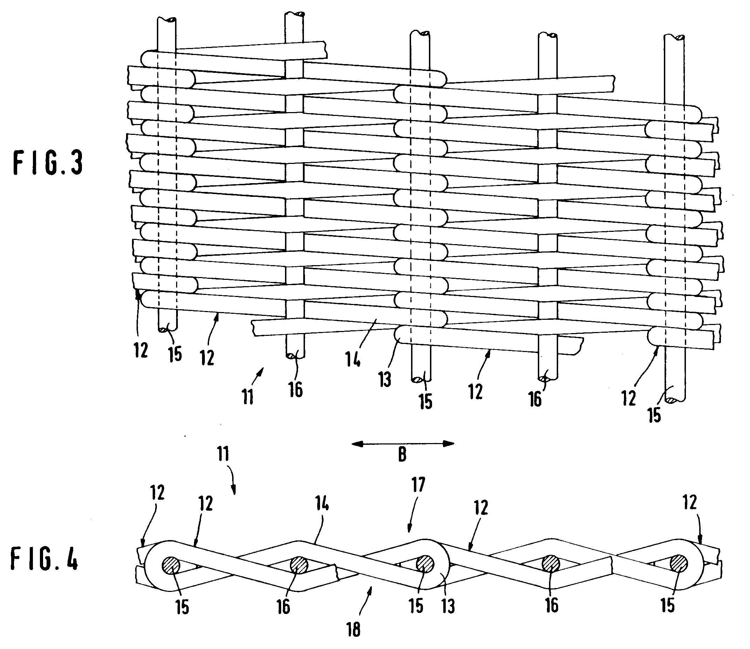

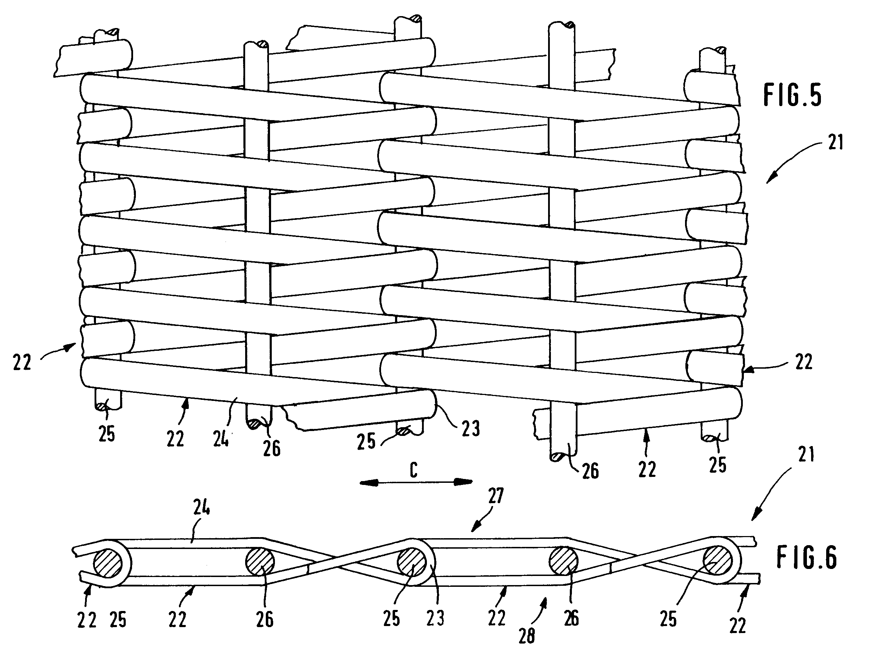

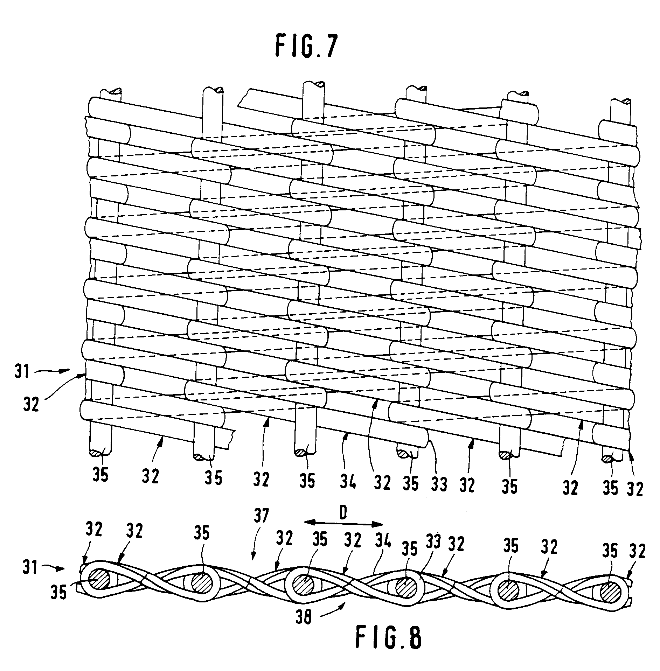

Daneben ist es bekannt, solche Drahtgliederbänder zumindest an der der Papierbahn zugewandten Seite mit einer zusätzlichen Schicht zu versehen, beispielsweise in Form eines aufgenadelten oder angeklebten Faservlieses (vgl. DE-OS 24 19 751, Figur 3), in Form eines Gewebes (vgl. EP-B-0̸ 0̸80̸ 713) oder in Form von gelochten Folien (EP-B-0̸ 211 471). Diese zusätzlichen Schichten sollen eine gleichmäßigere Oberfläche erzeugen und zusätzlich die Luftdurchlässigkeit auf einen gewünschten Wert herabsetzen.

Bei allen bekannten, Drahtgliederbändern ist die Dicke immer etwas größer als die Dicke des Steckdrahtes zuzüglich des zweifachen Durchmessers des Drahtgliederbandes. Insbesondere beim Einsatz in der Trockenpartie einer Papiermaschine, wo die Drahtgliederbänder vornehmlich eingesetzt werden, ist jedoch eine geringe Dicke des Drahtgliederbandes erwünscht, um zum einen die Wärmeübertragung und damit den Trocknungswirkungsgrad möglichst günstig zu gestalten. Zum anderen hat dies eine geringe Geschwindigkeitsdifferenz zwischen Papierbahn und Drahtgliederkanal bei starken Umschlingungswinkeln zur folge, wie sie insbesondere in der ersten Trockengruppe bei geschlossener Bahnführung gegeben sein kann.

Außerdem besteht aus den schon oben genannten Gründen das Ziel, das mit dem Drahtgliederband transportierte Luftvolumen möglichst gering zu halten. Schließlich ist auch ein Bedarf gegeben, die Flexibilität von Drahtgliederbändern zu erhöhen, damit sie sich besser an die Trockenzylinder anschmiegen können.

DE-A-3015229 offenbart ein Förderband, bei dem Drahtelemente- vorliegend gleizsusetzen mit den Windungssschenkeln - auf Abstand gehalten werden sollen. Dieser Abstand ist dadurch hergestellt, daß die Drahtelemente an ihren Enden mehrfach am den jeweiligen Steckdraht Schraubenförmig gewunden werden. Die Windungsschenkel wechseln zwischen jeweils zwei Steckdrähten mindestens einmal die Flachseiten des Förderbandes.

Der Erfindung liegt demnach die Aufgabe zugrunde, ein Drahtgliederband der aus den vorzitierten Druckschriften bekannten Gattung derart auszubilden, daß es eine möglichst geringe Dicke hat, weniger Luftvolumen mitschleppt und elastischer ist.

Diese Aufgabe wird erfindungsgemäß dadurch gelöst, daß die Windungsschenkel wenigstens eines Teils der Drahtwendeln zwischen jeweils zwei Kopfbögen mindestens einmal die Flachseiten des Drahtgliederbandes wechseln. Der Grundgedanke der Erfindung besteht also darin, daß wenigstens ein Teil der Windungsschenkel einer Drahtwendel zwischen jeweils zwei Kopfbögen durch das Innere des Drahtgliederbandes hindurchgehen und auf diese Weise von der einen Flachseite zur anderen Flachseite wechseln. Dies hat zur Folge, daß das Innere des Drahtgliederbandes - je nach Anzahl der hindurchgeführten Windungsschenkel - mit Drahtmaterial der Drahtwendeln gefüllt und damit das freie innere Volumen herabgesetzt wird. Dies mindert das mitgeführte Luftvolumen beträchtlich.

Ein weiterer Vorteil besteht darin, daß insbesondere dann, wenn sämtliche Windungsschenkel einen derartigen Verlauf haben, die Dicke des Drahtgliederbandes auf den geringstmöglichen Wert, nämlich die Dicke des Steckdrahtes zuzüglich der zweifachen Dicke des für die Drahtwendel verwendeten Drahtes, reduziert wird. Da sich zudem zwischen zwei benachbarten, durch das Innere des Drahtgliederbandes gehenden Windungsschenkeln Kreuzungspunkte bilden, wird die Biegsamkeit des Drahtgliederbandes auch zwischen den Steckdrähten verbessert, mit der Folge, daß sich das Drahtgliederband insgesamt besser an Umlenkeinrichtungen wie Walzen oder dergleichen anpassen kann. Schließlich wird auch die Führung der Steckdrähte verbessert, da der Umschlingungswinkel der Kopfbögen größer als 180̸° ist.

Ein zusätzlicher Vorteil des erfindungsgemäßen Drahtgliederbandes liegt darin, daß bei der Thermofixierung auch jeder der durch das Innere des Drahtgliederbandes geführte Windungsschenkel auf die Seite geführt wird, von der aus die Wärmeeinwirkung erfolgt und somit unmittelbar der Thermofixierwärme ausgesetzt wird. Bei den konventionellen Drahtgliederbändern ist dies nicht der Fall, denn die auf der der Wärmeeinwirkung abgewandten Seite verlaufenden Windungsschenkel erreichen eine erheblich geringere Temperatur als die auf der gegenüberliegenden Seite verlaufenden Windungsschenkel.

Der Grundgedanke der Erfindung läßt sich in vielerlei Ausführungsformen verwirklichen. Dies geschieht schon dann, wenn nur ein Teil der Windungsschenkel einer Drahtwendel oder wenn die Windungsschenkel nur eines Teils der Drahtwendeln den erfindungsgemäßen Verlauf durch das Innere des Drahtgliederbandes haben. Das Drahtgliederband wird aber hinsichtlich einer Reihe von Eigenschaften gleichförmiger, wenn die Windungsschenkel aller Drahtwendeln zwischen jeweils zwei Kopfbögen die Flachseiten des Drahtgliederbandes wechseln.

In der einfachsten Ausführungsform wechseln die Windungsschenkel zwischen jeweils zwei Kopfbögen nur einmal, wobei sich die mit diesen Windungsschenkeln ausgerüsteten Drahtwendeln nur über zwei Steckdrähte erstrecken. Die Drahtwendeln haben dann - von der Stirnseite her gesehen - den Verlauf einer liegenden Acht. Dabei eignet sich diese Ausführungsform besonders dafür, nur rechts- oder nur linksgewendelte Drahtwendeln zu verwenden, was die Herstellung vereinfacht. Zudem ergibt sich hierdurch ohne die Verwendung zusätzlicher Füllmaterialien eine wesentlich geringere Luftdurchlässigkeit im Vergleich zu konventionellen Drahtgliederbändern mit bis auf den Verlauf der Windungsschenkeln gleicher Struktur.

Der Grundgedanke der Erfindung läßt sich auch in einer Ausführungsform verwirklichen, bei der sich die Drahtwendeln mit die Flachseiten wechselnden Windungsschenkeln über wenigstens drei Steckdrähte erstrecken und dabei wenigstens zweimal die Flachseiten wechseln, und zwar vorzugsweise in jedem Zwischenraum zwischen zwei benachbarten Steckdrähten. Dies beschleunigt die Montage, führt allerdings auch zu einer etwas geringeren Gelenkigkeit des Drahtgliederbandes. Alternativ kann vorgesehen sein, daß sich die Windungsschenkel - bei einer Erstreckung der Drahtwendeln über wenigstens drei Steckdrähte - über wenigstens zwei benachbarte Steckdrähte auf einer Flachseite des Drahtgliederbandes verlaufen. Bei diesen Drahtwendeln handelt es sich um eine Kombination konventioneller Drahtwendeln mit erfindungsgemäßen Drahtwendeln. Die Windungsschenkel verlaufen also wenigstens einmal durch das Innere des Drahtgliederbandes, dann jedoch in konventioneller Weise an einer der Flachseiten über wenigstens zwei Steckdrähte. In diesem Bereich sind vielfältige Kombinationen denkbar, und zwar auch Drahtwendeln mit konventionell verlaufenden Windungsschenkeln und Drahtwendeln mit durch das Innere des Drahtgliederbandes verlaufenden Windungsschenkeln. Auf diese Weise können die Drahtgliederbänder optimal den jeweiligen Anforderungen angepaßt werden.

Die Ausführungsformen mit sich über wenigstens drei Steckdrähte erstreckenden Drahtwendeln überlappen sich in der einfachsten Form nur im Bereich ihrer Kopfbögen und der dort angeordneten Steckdrähte. Zwischen diesen zwei benachbarte Drahtwendeln kuppelnden Steckdrähten sind dann weitere Steckdrähte angeordnet, über die die Windungsschenkel an Ober- und Unterseite verlaufen. Es liegt jedoch im Rahmen der Erfindung, auch diese Steckdrähte zumindest teilweise zur Kupplung der Drahtwendeln heranzuziehen, indem zwischen den benachbarten Drahtwendeln eine sich mindestens über zwei Steckdrähte erstreckende Überlappung geschaffen wird, wie sie sich beispielsweise aus den Figuren (4) und (5) der EP-A-0̸ 0̸18 20̸0̸ ergibt. Hierdurch wird das Drahtgliederband besonders dicht mit viel Drahtmaterial im Innenraum, wodurch die Luftdurchlässigkeit und das mittransportierte Luftvolumen gering bleiben. Dabei ist es zweckmäßig, daß sich die über wenigstens drei Steckdrähte gehenden Drahtwendeln über eine solche Anzahl von Steckdrähten überlappen, die um eins geringer ist als die Anzahl der Steckdrähte, über die sich diese Drahtwendeln erstrecken. Hierdurch ergibt sich eine besonders dichte Konfiguration.

Im übrigen lassen sich bei dem erfindungsgemäßen Drahtgliederband grundsätzlich alle im Stand der Technik für die konventionellen Drahtgliederbänder bekannten Ausführungsformen verwirklichen. So unterliegt die Erfindung keinen Beschränkungen hinsichtlich des Materials sowie der Querschnittsformgebung der Drähte der Drahtwendeln und der Steckdrähte, d. h. es lassen sich auch Drahtformen verwirklichen, wie sie sich aus der EP-A-0̸ 211 471 ergeben. Grundsätzlich sind auch mehrlagige Ausführungsformen verwirklichbar, ähnlich wie sie sich der EP-A-0̸ 0̸18 20̸0̸ entnehmen lassen, wobei nicht nur die auf die einzelnen Lagen beschränkten Drahtwendeln, sondern auch die zur Verbindung der Lagen herangezogenen Drahtwendeln durch den Innenraum gehende Windungsschenkel haben können. Im ersteren Fall sind dann unter den Flachseiten im Sinne dieser Erfindung auch diejenigen zu verstehen, die von den einzelnen Lagen gebildet werden, denn jede Lage kann als ein eigenes Drahtgliederband angesehen verden. Als Material für die Drahtwendeln und Steckdrähte kommen vornehmlich thermofixierbare Kunststoff infrage, z.B. Polyamide oder Polyester.

Ferner kann das erfindungsgemäße Drahtgliederband auch mit einer Auflage in Form eines Faservlieses, Gewebes oder einer Folie versehen sein (vgl. DE-OS 24 19 751; EP-A-0̸ 0̸80̸ 713; EP-A- 0̸ 211 471). Es bestehen auch keine Beschränkungen hinsichtlich der Anzahl der von den Kopfbögen eingefaßten Steckdrähte. Bei Bedarf ist es auch nicht ausgeschlossen, zusätzlich Füllmaterial in die noch freigebliebenen Räume des Drahtgliederbandes aufzunehmen, beispielsweise in Form von Schaumstoffen, textilen Fäden oder Profildrähten.

In der Zeichnung ist die Erfindung an Hand von Ausführungsbeispielen näher veranschaulicht. Es zeigen:
- Figur (1): eine Draufsicht auf ein erfindungsgemäßes Drahtgliederband;
- Figur (2): eine Seitenansicht des Drahtgliederbandes gemäß Figur (1);
- Figur (3): eine Draufsicht auf ein weiteres Drahtgliederband;
- Figur (4): eine Seitenansicht des Drahtgliederbandes gemäß Figur (3);
- Figur (5): eine Draufsicht auf ein drittes Drahtgliederband;
- Figur (6): eine Seitenansicht des Drahtgliederbandes gemäß Figur (5);
- Figur (7): eine Draufsicht auf ein viertes Drahtgliederband und
- Figur (8): eine Seitenansicht des Drahtgliederbandes gemäß Figur (7).

Das in den Figuren (1) und (2) ausschnittsweise dargestellte Drahtgliederband (1) hat eine Längserstreckung in den Richtungen des Doppelpfeils (A) und ist in diesen Richtungen endlos. In Querrichtung hat es eine bestimmte, den jeweiligen Anforderungen angepaßte Breite.

Das Drahtgliederband (1) weist eine Vielzahl von in Längsrichtung (A) nebeneinander angeordneten, sich axial in Querrichtung erstreckenden Drahtwendeln - sämtlich mit (2) bezeichnet - auf. Jede Drahtwendel setzt sich nacheinander aus Kopfbögen - beispielhaft mit (3) bezeichnet - und jeweils zwei Kopfbögen (3) verbindenden Windungsschenkeln - beispielshaft mit (4) bezeichnet - zusammen, d. h. auf jeden Kopfbogen (3) folgt ein Windungsschenkel (4) und auf diesen wiederum ein Kopfbogen (3). Jeweils zwei benachbarte Drahtwendeln (2) überlappen sich im Bereich ihrer benachbarten Kopfbögen (3) derart, daß zwischen diesen Kopfbögen (3) ein sich in Querrichtung erstreckender Kanal gebildet wird. Dieser Kanal wird von einem Steckdraht - sämtlich mit (5) bezeichnet - ausgefüllt, wobei sich alle Steckdrähte (5) über die gesamte Breite des Drahtgliederbandes (1) erstrecken. Die Steckdrähte (5) liegen dabei innerhalb der sie umschlingenden Kopfbögen (3) an. Die Steckdrähte (5) bilden praktisch ein Scharniergelenk zwischen zwei benachbarten Drahtwendeln (2).

Die Besonderheit des dargestellten Drahtgliederbandes (1) besteht darin, daß die Windungsschenkel (4) durch das Innere des Drahtgliederbandes (1) gehen, d. h. von der einen Flachseite (7) zur anderen Flachseite (8) hin wechseln. Konkret heißt dies, daß ein bestimmter Windungsschenkel (4), nachdem er einen Steckdraht (5) an seiner Oberseite passiert hat, schräg nach unten fährt und den benachbarten Steckdraht (5) im Bereich der unteren Flachseite (8) umschlingt. Auf diese Weise ergibt sich eine Windungsform nach Art einer liegenden Acht, wobei sich zwei benachbarte Windungsschenkel (4) im Innern des Drahtgliederbandes etwa in der Mitte zwischen zwei Steckdrähten (5) kreuzen. Dies hat zur Folge, daß die Biegesteifigkeit zwischen zwei Steckdrähten (5) wesentlich herabgesetzt ist und sich deshalb das Drahtgliederband (1) wesentlich besser an Führungswalzen anschmiegen kann. Hinzu kommt, daß der Innenraum des Drahtgliederbandes (1) auch zwischen den Steckdrähten (5) durch Drahtmaterial der Drahtwendeln (2) im wesentlichen ausgefüllt wird, wodurch die Luftdurchlässigkeit herabgesetzt und das mit dem Drahtgliederband (1) mitgeführte Luftvolumen wesentlich verringert wird. Hinzu kommt, daß die Drahtwendeln (2) untereinander identisch sind, also die gleiche Schraubendrehrichtung haben, d. h. es bedarf zur Herstellung des Drahtgliederbandes (1) nur eines Typs von Drahtwendeln (2). Die Drahtwendeln (2) selbst bestehen aus einem Flachdraht, der im Querschnitt rechteckförmig ist. Dabei sind die größere Erstreckung in der Ebene des Drahtgliederbandes (1) und die kleinere Erstreckung quer zu dieser Ebene ausgerichtet. Als Material kommen insbesondere Polyester oder Polyamide in Frage.

Das in den Figuren (3) und (4) dargestellte Drahtgliederband (11) weist ebenfalls eine Vielzahl von Drahtwendeln - sämtlich mit (12) bezeichnet - auf, welche in Längsrichtung - Doppelpfeil (B) - nebeneinander angeordnet sind und aus Kopfbögen - beispielhaft mit (13) bezeichnet - und diese verbindenden Windungsschenkeln - beispielhaft mit (14) bezeichnet - bestehen. Die Drahtwendeln (12) überlappen sich im Bereich ihrer Kopfbögen und bilden dort - wie bei dem Ausführungsbeispiel gemäß den Figuren (1) und (2) - Kanäle für Kupplungsdrähte fungierende Steckdrähte (15), die sich quer zur Längsrichtung (B) erstrecken. Diese Steckdrähte (15) bilden hier ebenfalls Scharniere zwischen zwei benachbarten Drahtwendeln (12). Dabei wechselt sich jeweils ein Kopfbogen (13) der einen Drahtwendel (12) mit einem Kopfbogen (13) der anderen Drahtwendel (12) ab.

Die Windungsschenkel (14) der Drahtwendeln (12) haben bei diesem Ausführungsbeispiel einen Verlauf, bei dem sie zwischen zwei Kopfbögen (13) zweimal zwischen den Flachseiten (17, 18) des Drahtgliederbandes (11) wechseln, d. h. ein bestimmter Windungsschenkel (14), der im Anschluß an einen Kopfbogen (13) im Bereich der oberen Flachseite (17) beginnt, geht schräg nach unten durch das Innere des Drahtgliederbandes (11) bis zur unteren Flachseite (18) und anschließend wieder hoch bis zur oberen Flachseite (17), bis er in den anschließenden Kopfbogen (13) übergeht. Beim jeweils benachbarten Windungsschenkel (14) ist der Verlauf dann umgekehrt. Auf diese Weise kreuzen sich zwei benachbarte Windungsschenkel (14) zwischen zwei Kopfbögen (13) zweimal und bilden dabei etwa in der Mitte zwischen den beiden Kopfbögen (13) einen sich über die gesamte Breite des Drahtgliederbandes (11) erstreckenden, zusätzlichen Kanal, durch den ein weiterer Steckdraht - sämtlich mit (16) bezeichnet - verläuft. Dieser Steckdraht hat also keine Kupplungsfunktion, sondern stabilisiert den Verlauf der Windungsschenkel (14) im Mittenbereich zwischen zwei Kopfbögen (13).

Auch bei diesem Drahtgliederband (11) befindet sich - wie aus den Figuren (3) und (4) ersichtlich - viel Drahtmaterial im Inneren, wodurch die Luftdurchlässigkeit und das mitgeführte Luftvolumen verringert wird. Gegenüber dem in den Figuren (1) und (2) dargestellten Beispiel ist dieses Drahtgliederband (11) wegen der verringerten Anzahl von kuppelnden Steckdrähten (15) etwas steifer. Da zwischen den kuppelnden Steckdrähten (15) jedoch zwei Kreuzungspunkte der Windungsschenkel (14) liegen, ist auch dieses Drahtgliederband (11) noch sehr flexibel und schmiegt sich gut an Führungswalzen an.

In den Figuren (5) und (6) ist ein weiteres Ausführungsbeispiel der Erfindung dargestellt, nämlich ein Drahtgliederband (21), das sich in Längsrichtung entsprechend dem Doppelpfeil (C) endlos erstreckt, während es quer dazu eine definierte Breite hat. Das Drahtgliederband (21) weist eine Vielzahl von in Längsrichtung (C) aufeinanderfolgenden Drahtwendeln - sämtlich mit (22) bezeichnet - auf, die sich axial in Querrichtung erstrecken.

Die Drahtwendeln (22) haben Kopfbögen - beispielhaft mit (23) bezeichnet - und diese jeweils verbindende Windungsschenkel - beispielhaft mit (24) bezeichnet -. Die Drahtwendeln (22) überlappen sich im Bereich ihrer Kopfbögen (23), und zwar abwechselnd ein Kopfbogen (23) der einen Drahtwendel (22) und ein Kopfbogen (23) der danebenliegenden Drahtwendel (22). Im Überlappungsbereich umschlingen sie jeweils einen kuppelnden Steckdraht - sämtlich mit (25) bezeichnet -, so daß dort ein scharnierähnliches Gelenk entsteht. Zwischen den kuppelnden Steckdrähten (25) sind - jeweils im Mittenbereich - weitere Steckdrähte (26) angeordnet, die mit den Steckdrähten (16) bei dem Ausführungsbeispiel gemäß den Figuren (3) und (4) vergleichbar sind und keine Kupplungsfunktion haben.

Der Verlauf eines bestimmten, in der Darstellung gemäß Figur (5) schräg nach oben verlaufenden Windungsschenkel (24) ist derart, daß er mit einem ersten Abschnitt im Anschluß an den linksseitigen Kopfbogen (23) im Bereich der unteren Flachseite (28) verbleibt und auch den nicht kuppelnden Steckdraht (26) an dessen Unterseite passiert. In einem zweiten Abschnitt verläuft der betreffende Windungsschenkel (24) durch den Innenraum des Drahtgliederbandes (21) nach oben und geht im Bereich der oberen Flachseite (27) in den rechtsseitigen Kopfbogen (23) über. Der sich an diesen Kopfbogen (23) wiederum anschließende, nächste Windungsschenkel (24) geht in einem ersten Abschnitt durch das Innere des Drahtgliederbandes (21) von der unteren Flachseite (28) zur oberen Flachseite (27) und kreuzt den nicht kuppelnden Steckdraht (26) an dessen Oberseite. In einem zweiten Abschnitt verbleibt dann der Windungsschenkel (24) im Bereich der oberen Flachseite (27) und geht dann schließlich in einen linksseitigen Kopfbogen (23) über.

Durch diese Gestaltung entstehen in ihren Eigenschaften unterschiedliche Bereiche. In dem Bereich zwischen linksseitigen Kopfbögen (23) und dem nicht kuppelnden Steckdraht (26) ist die Struktur ähnlich den bei konventionellen Drahtgliederbändern mit großem freien inneren Volumen und erheblicher Steifigkeit. In dem sich daran rechts anschließenden Bereich zwischen nichtkuppelndem Steckdraht (26) und rechtsseitigen Kopfbögen (23) kreuzen sich die dort verlaufenden Abschnitte der Windungsschenkel (24) mit der Folge, daß in diesem Bereich die Flexibilität wesentlich größer ist. Außerdem konzentriert sich die Drahtmasse auf den inneren Bereich des Drahtgliederbandes (21), d. h. die Luftdurchlässigkeit und das mitgeführte Luftvolumen sind geringer.

Das in den Figuren (7) und (8) dargestellte Drahtgliederband (31) hat eine durch den Doppelpfeil (D) angezeigte Längserstreckung und eine quer dazu verlaufende, definierte Breite. Es hat zunächst große Ähnlichkeit mit dem in den Figuren (3) und (4) dargestellten Drahtgliederband (11), wobei jedoch der wesentliche Unterschied darin besteht, daß sich die einzelnen Drahtwendeln hier stärker überlappen.

Das Drahtgliederband (31) hat eine Vielzahl von in Längsrichtung (D) aneinandergefügten Drahtwendeln - sämtlich mit (32) bezeichnet -, deren Achsen in Breitenrichtung verlaufen und deren einzelne Windungen sich aus Kopfbögen (33) und diese jeweils verbindenden Windungsschenkeln (34) zusammensetzen. In regelmäßigen Abständen sind Steckdrähte - sämtlich mit (35) bezeichnet - vorgesehen, die sich quer zur Längsrichtung (D) über die gesamte Breite des Drahtgliederbandes (31) erstrecken.

Die Überlappung zweier benachbarter Drahtwendeln (32) beschränkt sich bei diesem Ausführungsbeispiel im Unterschied zu dem nach den Figuren (3) und (4) nicht auf die Kopfbögen (33), sondern erstreckt sich jeweils auf etwa die Hälfte der Länge eines Windungsschenkels (34), d. h. die Überlappung beträgt ca. 50̸%. Zwei benachbarte Drahtwendeln (32) haben deshalb nicht nur einen gemeinsamen Steckdraht (35), sondern jeweils zwei. Dabei wechseln sich an einem Steckdraht (35) - in Breitenrichtung gesehen - der Kopfbogen (33) einer ersten Drahtwendel (32) mit einem Windungsschenkel (34) der in Längsrichtung (D) unmittelbar benachbarten, zweiten Drahtwendel (32) und ein Kopfbogen (33) einer zu der zweiten Drahtwendel (32) in Längsrichtung (D) unmittelbar benachbarten, dritten Drahtwendel (32) ab. Der betreffende Steckdraht (35) hat also Kupplungsfunktion für die erste und dritte Drahtwendel (32) und reine Führungsfunktion für den Windungsschenkel (34) der zweiten Drahtwendel (32).

Der Verlauf eines Windungsschenkels (34) unterscheidet sich nicht von dem beim Ausführungsbeispiel gemäß den Figuren (3) und (4), d. h. ein an der oberen Flachseite (37) sich an einen linksseitigen Kopfbogen (33) anschließender Windungsschenkel (34) geht durch das Innere des Drahtgliederbandes (31) zur unteren Flachseite (38) und kreuzt den Steckdraht (35) an dessen Unterseite. Anschließend geht er wieder hoch zur oberen Flachseite (37) und dort in einen rechtsseitigen Kopfbogen (33) über. Der sich daran anschließende Windungsschenkel (34) verläuft umgekehrt, d. h. er beginnt an der unteren Flachseite (38), durchquert das Drahtgliederband (31), passiert den benachbarten Steckdraht (35) an dessen Oberseite und geht dann wieder zur unteren Flachseite (38).

Bei dem dargestellten Drahtgliederband (31) ist zwar die Flexibilität eingeschränkt. Dafür ist die Luftdurchlässigkeit wegen der Dichte der sich überkreuzenden Windungsschenkel (34) und das mittransportierte Luftvolumen außerordentlich gering, ohne daß es hierfür besonderer Maßnahmen, wie der Anordnung von Füllmaterialien, bedarf.

Die in den Figuren (3) bis (8) dargestellten Ausführungsbeispiele lassen sich selbstverständlich auch dahingehend modifizieren, daß sich die jeweiligen Drahtwendeln (12, 22, 32) nicht nur über jeweils drei Steckdrähte (15, 16, 25, 26, 35) erstrecken, sondern über mehr als drei. Dabei können die Überlappungen sich auf die Kopfbögen (13, 23, 33) beschränken, aber auch so weit gehen, wie bei dem Ausführungsbeispiel nach den Figuren (7) und (8). Auf diese Weise lassen sich allein durch die Führung der Windungsschenkel ohne jede zusätzlichen Maßnahmen optimal an die jeweiligen Anforderungen hinsichtlich Luftdurchlässigkeit, transportiertes Luftvolumen, Flexibilität und Glattheit der Oberfläche angepaßte Drahtgliederbänder herstellen.

## Patentansprüche

1. Drahtgliederband (1; 11; 21; 31) für Prozeßzwecke, insbesondere als Papiermaschinenbespannung, mit einer Vielzahl von nebeneinander angeordneten, ineinandergreifenden Drahtwendeln (2; 12; 22; 32), welche Steckdrähte (5; 15; 25; 35) nur teilweise einfassende Kopfbögen (3; 13; 23; 33) aufweisen, deren Enden sich in die Kopfbögen (3; 13; 23; 33) verbindenden Windungsschenkeln (4; 14; 24; 34) fortsetzen,
dadurch gekennzeichnet, daß die Windungsschenkel (4; 14; 24; 34) wenigstens eines Teils der Drahtwendeln (2, 12, 22, 32) zwischen jeweils zwei Kopfbögen (3; 13; 23; 33) mindestens einmal die Flachseiten (7, 8; 17, 18; 27, 28; 37, 38) des Drahtgliederbandes (1; 11; 21; 31) wechseln.

2. Drahtgliederband nach Anspruch 1,
dadurch gekennzeichnet, daß die Windungsschenkel (4; 14; 24; 34) aller Drahtwendeln (2; 12; 22; 32) zwischen jeweils zwei Kopfbögen (3; 13; 23; 33) die Flachseiten (7, 8; 17, 18; 27, 28; 37, 38) des Drahtgliederbandes (1; 11; 21; 31) wechseln.

3. Drahtgliederband nach Anspruch 1 oder 2,
dadurch gekennzeichnet, daß die Windungsschenkel (4; 24) zwischen jeweils zwei Kopfbögen (3; 23) die Flachseiten (7, 8; 27, 28) des Drahtgliederbandes (1; 21) nur einmal wechseln.

4. Drahtgliederband nach Anspruch 3,
dadurch gekennzeichnet, daß sich die Drahtwendeln (2) mit den die Flachseite (7, 8) wechselnden Windungsschenkeln (4) nur über zwei Steckdrähte (5) erstrecken.

5. Drahtgliederband nach Anspruch 1 oder 2,
dadurch gekennzeichnet, daß sich die Drahtwendeln (12; 32) mit die Flachseiten (17, 18; 37, 38) wechselnden Windungsschenkeln (14, 34) über wenigstens drei Steckdrähte 15, 16; 35) erstrecken und wenigstens zweimal die Flachseiten (17, 18; 37, 38) wechseln.

6. Drahtgliederband nach Anspruch 5,
dadurch gekennzeichnet, daß die Windungsschenkel (14; 34) in jedem Zwischenraum zwischen zwei benachbarten Steckdrähten (15, 16; 35) die Flachseiten (17, 18; 37, 38) des Drahtgliederbandes (11; 31) wechseln.

7. Drahtgliederband nach einem der Ansprüche 1 bis 3 oder 5,
dadurch gekennzeichnet, daß sich die Drahtwendeln (22) mit die Flachseiten (27, 28) wechselnden Windungsschenkeln (24) über wenigstens drei Steckdrähte (25, 26) erstrecken und die Windungsschenkel (24) über wenigstens zwei benachbarte Steckdrähte (25, 26) auf einer Flachseite (27, 28) des Drahtgliederbandes (21) verlaufen.

8. Drahtgliederband nach einem der Ansprüche 1 bis 3 oder 5 bis 7,
dadurch gekennzeichnet, daß sich wenigstens ein Teil der Drahtwendeln (32) über wenigstens drei Steckdrähte (35) erstrecken und benachbarte Drahtwendeln (32) über wenigstens zwei Steckdrähte (35) überlappen.

9. Drahtgliederband nach Anspruch 8,
dadurch gekennzeichnet, daß sich die über wenigstens drei Steckdrähte (35) gehenden Drahtwendeln (32) über eine solche Anzahl von Steckdrähten (35) überlappen, die um eins geringer ist als die Anzahl der Steckdrähte (35), über die sich diese Drahtwendeln (32) erstrecken.

10. Drahtgliederband nach einem der Ansprüche 1 bis 9,
dadurch gekennzeichnet, daß die Drahtwendeln (2; 12, 22; 32) nur rechts- oder nur linksgewendelt sind.

## Claims

1. A filamentary element belt (1; 11; 21; 31) for process purposes, particularly as a covering for a paper-making machine, having a plurality of interlinked helical filaments (2; 12; 22; 32) disposed side by side, which have header ties (3; 13; 23; 33) which only partially surround insertion filaments (5; 15; 25; 35), the ends of which header ties extend into winding limbs (4; 14; 24; 34) which connect the header ties (3; 13; 23; 33),
characterised in that the winding limbs (4; 14; 24; 34) of at least part of the helical filaments (2, 12, 22, 32) change flat faces (7, 8; 17, 18; 27, 28; 37, 38) of the filamentary element belt (1; 11; 21; 31) at least once between each two header ties (3; 13; 23; 33).

2. A filamentary element belt according to claim 1, characterised in that the winding limbs (4; 14; 24; 34) of all helical filaments (2; 12; 22; 32) change flat faces (7, 8; 17, 18; 27, 28; 37, 38) of the filamentary element belt (1; 11; 21; 31) between each two header ties (3; 13; 23; 33).

3. A filamentary element belt according to claim 1 or 2, characterised in that the winding limbs (4; 24) only change flat faces (7, 8; 27, 28) of the filamentary element belt (1; 21) once between each two header ties (3; 23).

4. A filamentary element belt according to claim 3, characterised in that the helical filaments (2) having winding limbs (4) which change flat face (7, 8) extend over two insertion filaments (5) only.

5. A filamentary element belt according to claim 1 or 2, characterised in that the helical filaments (12; 32) having winding limbs (14, 34) which change flat faces (17, 18; 37, 38) extend over at least three insertion filaments (15, 16; 35) and change flat faces (17, 18; 37, 38) at least twice.

6. A filamentary element belt according to claim 5, characterised in that the winding limbs (14; 34) change flat faces (17, 18; 37, 38) of the filamentary element belt (11; 31) in each intermediate space between two adjacent insertion filaments (15, 16; 35).

7. A filamentary element belt according to any one of claims 1 to 3, or 5, characterised in that the helical filaments (22) having winding limbs (24) which change flat faces (27, 28) extend over at least three insertion filaments (25, 26) and the winding limbs (24) pass over at least two adjacent insertion filaments (25, 26) on one flat face (27, 28) of the filamentary element belt (21).

8. A filamentary element belt according to any one of claims 1 to 3 or 5 to 7, characterised in that at least part of the helical filaments (32) extends over at least three insertion filaments (35), and adjacent helical filaments (32) overlap over at least two insertion filaments (35).

9. A filamentary element belt according to claim 8, characterised in that the helical filaments (32) passing over at least three insertion filaments (35) overlap over a number of insertion filaments (35) which is one less than the number of insertion filaments (35) over which these helical filaments (32) extend.

10. A filamentary element belt according to any one of claims 1 to 9, characterised in that the helical filaments (2; 12, 22; 32) are only coiled to the right or to the left.

## Revendications

1. Tissu en hélices combinées (1; 11; 21; 31) pour des applications industrielles, notamment comme recouvrement pour des machines à papier, avec une multiplicité d'hélices de fil (2; 12; 22; 32) juxtaposées et engagées les unes dans les autres, qui présentent des coudes de tête (3; 13; 23; 33) n'enserrant que partiellement des fils de trame (5; 15; 25; 35) et dont les extrémités se poursuivent par des branches de spires (4; 14; 24; 34) reliant les coudes de tête (3; 13; 23; 33),
**caractérisé** en ce que les branches de spires (4; 14; 24; 34) d'au moins une partie des hélices de fil (2; 12 ; 22 ; 32), chaque fois entre deux coudes de tête (3 ; 13 ; 23 ; 33), alternent au moins une fois entre les côtés plats (7, 8; 17, 18; 27, 28; 37, 38) du tissu en hélices combinées (1; 11; 21; 31).

2. Tissu en hélices combinées selon la revendication 1, **caractérisé** en ce que les branches de spires (4; 14; 24; 34) de toutes les hélices de fil (2; 12; 22; 32), chaque fois entre deux coudes de tête (3; 13; 23; 33), alternent entre les côtés plats (7, 8; 17, 18; 27, 28; 37, 38) du tissu en hélices combinées (1; 11; 21; 31).

3. Tissu en hélices combinées selon la revendication 1 ou 2, **caractérisé** en ce que les branches de spires (4; 24), chaque fois entre deux coudes de tête (3; 23), alternent une seule fois entre les côtés plats (7, 8; 27, 28) du tissu en hélices combinées (1; 21).

4. Tissu en hélices combinées selon la revendication 3, **caractérisé** en ce que les hélices de fil (2) présentant les branches de spires (4) alternant entre les côtés plats (7, 8) ne s'étendent que sur deux fils de trame (5).

5. Tissu en hélices combinées selon la revendication 1 ou 2, **caractérisé** en ce que les hélices de fil (12, 32) présentant des branches de spires (14; 34) alternant entre les côtés plats (17, 18; 37, 38) s'étendent sur au moins trois fils de trame (15, 16; 35) et alternent au moins deux fois entre les côtés plats (17, 18; 37, 38).

6. Tissu en hélices combinées selon la revendication 5, **caractérisé** en ce que les branches de spires (14; 34) alternent entre les côtés plats (17, 18; 37, 38) du tissu en hélices combinées (11; 31) dans chaque espace intermédiaire entre deux fils de trame voisins (15, 16; 35).

7. Tissu en hélices combinées selon l'une des revendications 1 à 3 ou 5, **caractérisé** en ce que les hélices de fil (22) présentant des branches de spires (24) alternant entre les côtés plats (27, 28) s'étendent sur au moins trois fils de trame (25, 26) et les branches de spires (24) s'étendent, sur au moins deux fils de trame voisins (25, 26), sur un côté plat (27, 28) du tissu en hélices combinées (21).

8. Tissu en hélices combinées selon l'une des revendications 1 à 3 ou 5 à 7, **caractérisé** en ce qu'au moins une partie des hélices de fil (32) s'étendent sur au moins trois fils de trame (35), et les hélices de fil voisines (32) se chevauchent sur au moins deux fils de trame (35).

9. Tissu en hélices combinées selon la revendication 8, **caractérisé** en ce que les hélices de fil (32) s'étendant sur au moins trois fils de trame (35) se chevauchent sur un nombre de fils de trame (35) qui est inférieur d'une unité au nombre de fils de trame (35) sur lesquels s'étendent ces hélices de fil (32).

10. Tissu en hélices combinées selon l'une des revendications 1 à 9, **caractérisé** en ce que les hélices de fil (2; 12; 22; 32) sont uniquement des hélices à pas à droite ou uniquement des hélices à pas à gauche.
